# EUROPEAN PATENT APPLICATION

(11) **EP 4 729 990 A1**
(43) Date of publication of application: **22.04.2026**
(21) Application number: 25208726.7
(22) Date of filing: 15.10.2025
(51) Int. Cl.: G01S 19/39, G01S 19/04, G01S 19/49

(54) **PREDICTION SYSTEM FOR PREDICTING OCCURRENCE OF POSITIONING ABNORMALITY, AND METHOD FOR PREDICTING OCCURRENCE OF POSITIONING ABNORMALITY**

(30) Priority: 17.10.2024 JP 2024181533
(71) Applicant: Kubota Corporation, Osaka 556-8601 (JP)
(72) Inventor: CHABATA, Akira, SAKAI-SHI, OSAKA, 5900908 (JP); KATO, Koji, SAKAI-SHI, OSAKA, 5900908 (JP); NAGAMATSU, Toshinobu, SAKAI-SHI, OSAKA, 5900908 (JP)
(74) Representative: Cabinet Beau de Loménie

(57) **Abstract**

Provided are a prediction system for predicting occurrence of a positioning abnormality and a method for predicting occurrence of positioning abnormality.

A prediction system according to an aspect of the present disclosure includes a plurality of base stations configured to receive base station reception information from a satellite, a first calculation unit configured to derive base station error information for each of the base stations on the basis of the base station reception information for each of the base stations and base station coordinates for each of the base stations, a storage unit configured to store a variation characteristic indicating a relationship between a first change amount, which is a change amount of the base station error information accompanied by a lapse of time, and occurrence of a positioning abnormality at a predetermined position, and a second calculation unit configured to derive predicted abnormality information for predicting occurrence of the positioning abnormality on the basis of the base station error information and the variation characteristic.

## Description

### TECHNICAL FIELD

The present disclosure relates to a prediction system for predicting occurrence of a positioning abnormality and a method for predicting occurrence of a positioning abnormality.

### BACKGROUND ART

Global navigation satellite system (GNSS) positioning is widely used as a method of positioning a position of a mobile station such as an agricultural machine or a construction machine. In the GNSS positioning, due to the influence of error information such as an ionospheric error and a tropospheric error, a deviation (hereinafter, sometimes referred to as a "positioning abnormality") exceeding an allowable range may occur between the actual position of the mobile station and the positioning information derived by the GNSS positioning.

Patent Literature 1 discloses a work vehicle including a constituent device for automatic traveling of a mobile station such as an agricultural machine or a construction machine using RTK-GNSS positioning. In automatic traveling of a mobile station such as an agricultural machine or a construction machine, highly accurate positioning information of the mobile station is required for ensuring safety of a worksite such as a farm field or a construction site. When a positioning abnormality occurs, the accuracy of the positioning information decreases, and thus it may be difficult to ensure the safety of the worksite in the automatic traveling of the mobile station. Thus, in a case where a positioning abnormality occurs, the automatic traveling of the mobile station is stopped to ensure the safety of the worksite.

As a technique for determining a positioning abnormality, for example, Patent Literature 2 discloses an information processing device that calculates a positioning accuracy index to be an index of reliability of a positioning result on the basis of a degree of variation according to a variation in a predetermined period of a parameter including an ionospheric error, a tropospheric error, and the like.

### CITATION LIST

### [PATENT LITERATURE]

PATENT LITERATURE 1: Japanese Laid-Open Patent Publication No. 2018-105708
PATENT LITERATURE 2: WO 2020/066155 A

### SUMMARY OF THE INVENTION

### [TECHNICAL PROBLEM]

According to the technique described in Patent Literature 2, it is possible to determine whether or not a positioning abnormality occurs at the time of positioning on the basis of the positioning accuracy index. Thus, in the information processing device of Patent Literature 2, when it is determined that the positioning abnormality has occurred, it is possible to ensure the safety of the worksite by stopping the automatic traveling of the mobile station. On the other hand, the stopping of automatic traveling of the mobile station causes a decrease in work efficiency in the worksite.

Due to the occurrence of the positioning abnormality, the time until the positioning abnormality is resolved and the automatic traveling is resumed after the automatic traveling of the mobile station is stopped may be prolonged. As means for continuing the automatic traveling of the mobile station after the occurrence of the positioning abnormality, for example, switching of a base station as a transmission source of correction information received by the mobile station, a change from GNSS positioning to position identification by dead reckoning, and the like are known. Here, transition to the means for continuing the automatic traveling may take time.

The technique described in Patent Literature 2 determines whether or not a positioning abnormality occurs at the time of positioning, and cannot predict the occurrence of positioning abnormality. Therefore, in the technique described in Patent Literature 2, when a positioning abnormality occurs, it takes time to shift to the above-described means for continuing the automatic traveling of the mobile station, and the restart of the automatic traveling of the mobile station may be delayed.

In view of such conventional problems, an object of the present disclosure is to provide a prediction system capable of predicting occurrence of positioning abnormality and a method for predicting occurrence of positioning abnormality.

### [SOLUTION TO PROBLEM]

A prediction system according to an aspect of the present disclosure includes a plurality of base stations configured to receive base station reception information from a satellite, a first calculation unit configured to derive base station error information for each of the base stations on the basis of the base station reception information for each of the base stations and base station coordinates for each of the base stations, a storage unit configured to store a variation characteristic indicating a relationship between a first change amount, which is a change amount of the base station error information accompanied by a lapse of time, and occurrence of a positioning abnormality at a predetermined position, and a second calculation unit configured to derive predicted abnormality information for predicting occurrence of the positioning abnormality on the basis of the base station error information and the variation characteristic.

Further, a method for predicting occurrence of positioning abnormality according to another aspect of the present disclosure includes a first reception step of receiving base station reception information from a satellite in a plurality of base stations, an error information deriving step of deriving base station error information for each of the base stations on the basis of the base station reception information for each of the base stations and base station coordinates for each of the base stations, and a prediction step of predicting occurrence of the positioning abnormality on the basis of a variation characteristic indicating a relationship between a first change amount, which is a change amount of the base station error information accompanied by a lapse of time, and occurrence of a positioning abnormality at a predetermined position.

### [ADVANTAGEOUS EFFECTS OF THE INVENTION]

According to the present disclosure, it is possible to provide a prediction system capable of predicting occurrence of positioning abnormality and a method for predicting occurrence of positioning abnormality.

### BRIEF DESCRIPTION OF DRAWINGS

FIG. 1 is a schematic diagram illustrating an overall configuration of a prediction system according to a first embodiment of the present disclosure.
FIG. 2 is a conceptual diagram of derivation of positioning information.
FIG. 3 is a conceptual diagram of derivation of error information.
FIG. 4 is a conceptual diagram of derivation of predicted abnormality information and predicted base station information.
FIG. 5 is an explanatory diagram for describing a first case of deriving the predicted abnormality information.
FIG. 6 is an explanatory diagram for describing a variation characteristic used for deriving the predicted abnormality information that a positioning abnormality will occur in FIG. 5(c).
FIG. 7 is an explanatory diagram for describing a second case of deriving the predicted abnormality information.
FIG. 8 is an explanatory diagram for describing a third case of deriving the predicted abnormality information.
FIG. 9 is an explanatory diagram for describing a variation characteristic used when the predicted abnormality information that a positioning abnormality will occur is derived in FIG. 8(b).
FIG. 10 is an explanatory diagram for describing a variation characteristic used when the predicted abnormality information that a positioning abnormality will occur is not derived in FIG. 8(c).
FIG. 11 is an explanatory diagram for describing a derivation case of the predicted base station information.
FIG. 12 is a flowchart illustrating a flow of processing by the prediction system according to the first embodiment of the present disclosure.
FIG. 13 is a schematic diagram illustrating an overall configuration of a prediction system according to a second embodiment of the present disclosure.
FIG. 14 is a flowchart illustrating a flow of prediction of occurrence of positioning abnormality by the prediction system according to the second embodiment of the present disclosure.
FIG. 15 illustrates a modification of the flowchart illustrated in FIG. 12.

### DETAILED DESCRIPTION

### <Outline of Embodiment of Present Disclosure>

Hereinafter, an outline of embodiments of the present disclosure will be listed and described.
(1) A prediction system according to the present embodiment includes:
   a plurality of base stations configured to receive base station reception information from a satellite;
   a first calculation unit configured to derive base station error information for each of the base stations on the basis of the base station reception information for each of the base stations and base station coordinates for each of the base stations;
   a storage unit configured to store a variation characteristic indicating a relationship between a first change amount, which is a change amount of the base station error information accompanied by a lapse of time, and occurrence of a positioning abnormality at a predetermined position; and
   a second calculation unit configured to derive predicted abnormality information for predicting occurrence of the positioning abnormality on the basis of the base station error information and the variation characteristic.

According to the prediction system of the present embodiment, it is possible to derive predicted abnormality information for predicting occurrence of a positioning abnormality at a predetermined position.

(2) In the prediction system of (1) described above, the base station reception information may include at least a pseudo-distance and a carrier phase.

(3) In the prediction system of (1) or (2) described above, the base station error information may include at least one selected from an ionospheric delay error and a tropospheric delay error in the base stations.

(4) In the prediction system according to any one of (1) to (3) described above, the variation characteristic may include a past record indicating a relationship between information of the first change amount at a base station position of each of the base stations and occurrence of the positioning abnormality in a predetermined period and a predetermined time zone.

According to the prediction system of any one of (2) to (4) described above, the prediction accuracy of the occurrence of the positioning abnormality at the predetermined position is improved.

(5) In the prediction system according to any one of (1) to (4), described above, the second calculation unit may derive predicted abnormality information that the positioning abnormality will occur when a base station position of the base station in which the first change amount exceeds a predetermined reference approaches the predetermined position.

According to the prediction system of (5) described above, the prediction accuracy of the occurrence of the positioning abnormality at the predetermined position is further improved.

(6) The prediction system according to any one of (1) to (4) described above may include:
a mobile station configured to receive mobile station reception information from a satellite;
a third calculation unit configured to derive positioning information of the mobile station based on the base station reception information and the mobile station reception information, in which
the predetermined position may be the positioning information,
the first calculation unit may derive the base station error information and mobile station error information of the mobile station on the basis of the base station reception information, the base station coordinates, the mobile station reception information, and the positioning information,
the variation characteristic may indicate a relationship among the first change amount, a second change amount that is a change amount of the mobile station error information accompanied by a lapse of time, and occurrence of a positioning abnormality in the positioning information, and
the second calculation unit may derive the predicted abnormality information on the basis of the base station error information, the mobile station error information, and the variation characteristic.

According to the prediction system of (6) described above, it is possible to derive predicted abnormality information for predicting occurrence of a positioning abnormality in a mobile station such as an agricultural machine or a construction machine.

(7) In the prediction system (6) described above, the mobile station reception information may include at least a pseudo-distance and a carrier phase.

According to the prediction system of (7) described above, the prediction accuracy of the occurrence of the positioning abnormality in the mobile station is improved.

(8) The prediction system of (7) described above may include:
a fourth calculation unit configured to derive RTK correction information based on the base station reception information, in which
the third calculation unit may derive the positioning information on the basis of the RTK correction information and the mobile station reception information.

According to the prediction system (8) described above, the accuracy of the positioning information of the mobile station is improved.

(9) In the prediction system according to any one of (6) to (8) described above, the mobile station error information may include at least one selected from an ionospheric delay error and a tropospheric delay error in the mobile station.

According to the prediction system of (9) described above, the prediction accuracy of the occurrence of the positioning abnormality in the mobile station is further improved.

(10) In the prediction system according to any one of (6) to (9) described above, the second calculation unit may derive predicted abnormality information that the positioning abnormality will occur when a difference between the first change amount of any one of the base stations and the second change amount exceeds a predetermined reference.

According to the prediction system of (10) described above, the prediction accuracy of the occurrence of the positioning abnormality in the mobile station is further improved.

(11) The prediction system of any one of (6) to (10) described above may include a fifth calculation unit configured to derive predicted base station information for predicting the base station having the base station error information having a small difference from the mobile station error information on the basis of the base station error information, the mobile station error information, and the variation characteristic.

According to the prediction system of (11) described above, the base station to be switched can be set before the occurrence of the positioning abnormality by the predicted base station information. Thus, it is possible to smoothly switch the base station when a positioning abnormality occurs.

(12) In the prediction system of (11) described above, the third calculation unit may derive the positioning information on the basis of the base station reception information of the base station predicted by the predicted base station information and the mobile station reception information.

According to the prediction system of (12) described above, continuous automatic traveling of the mobile station becomes possible, and work efficiency in the worksite is improved.

(13) In the prediction system according to any one of (6) to (10) described above, the mobile station may include a sixth calculation unit that identifies a position of the mobile station by dead reckoning.

According to the prediction system of (13) described above, it is possible to identify the position of the mobile station by dead reckoning when a positioning abnormality occurs. Thus, continuous automatic traveling of the mobile station becomes possible, and work efficiency in the worksite is improved.

(14) A method for predicting occurrence of positioning abnormality according to another embodiment includes:
a first reception step of receiving base station reception information from a satellite in a plurality of base stations;
an error information deriving step of deriving base station error information for each of the base stations on the basis of the base station reception information for each of the base stations and base station coordinates for each of the base stations; and
a prediction step of predicting occurrence of the positioning abnormality on the basis of a variation characteristic indicating a relationship between a first change amount, which is a change amount of the base station error information accompanied by a lapse of time, and occurrence of a positioning abnormality at a predetermined position.

According to the method for predicting the occurrence of positioning abnormality according to another embodiment, the occurrence of positioning abnormality at a predetermined position can be predicted.

(15) The method for predicting occurrence of a positioning abnormality described above in (14) may include:
a second reception step of receiving mobile station reception information from a satellite in a mobile station,
a positioning step of deriving positioning information of the mobile station on the basis of the base station reception information and the mobile station reception information, in which
the predetermined position may be the positioning information,
the error information deriving step may be a step of deriving the base station error information and mobile station error information of the mobile station on the basis of the base station reception information, the base station coordinates, the mobile station reception information, and the positioning information,
the variation characteristic may indicate a relationship among the first change amount, a second change amount that is a change amount of the mobile station error information accompanied by a lapse of time, and occurrence of a positioning abnormality in the positioning information, and
the prediction step may include predicting occurrence of the positioning abnormality on the basis of the base station error information, the mobile station reception information, and the variation characteristic.

According to the method for predicting occurrence of a positioning abnormality described in (15) described above, occurrence of a positioning abnormality in a mobile station such as an agricultural machine or a construction machine can be predicted.

### <Details of Embodiment of Present Disclosure>

Hereinafter, embodiments of the present disclosure will be described in detail with reference to the drawings. Note that at least some of the embodiments described below may be arbitrarily combined.

### [Overall Configuration of Prediction System]

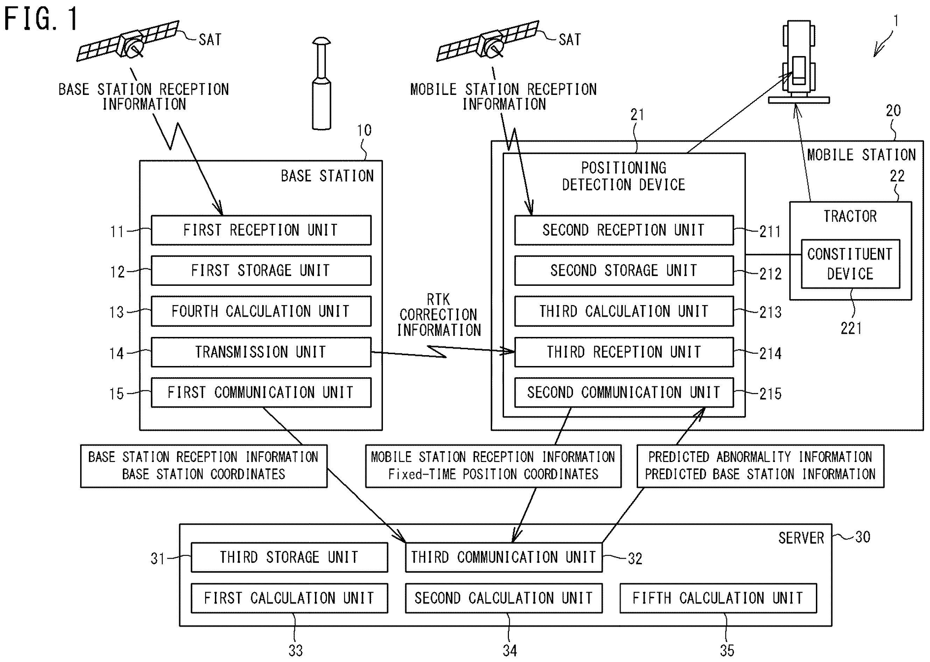

FIG. 1 is a schematic diagram illustrating an overall configuration of a prediction system 1 according to a first embodiment of the present disclosure. The prediction system 1 includes a plurality of base stations 10, a mobile station 20, and a server 30. Note that each of the plurality of base stations 10 has a similar configuration. Thus, in FIG. 1, one of the plurality of base stations 10 is illustrated, and the other base stations 10 are omitted. The mobile station 20 of the present embodiment is a tractor 22 including a positioning detection device 21. The tractor 22 is an example of a work vehicle, and the present disclosure is not limited to the tractor 22, and may be other work vehicles such as agricultural machines, construction machines, and utility vehicles.

The base station 10 includes a first reception unit 11, a first storage unit 12, a fourth calculation unit 13, a transmission unit 14, and a first communication unit 15. The base station 10 is a fixed base station fixed at a predetermined position. The first reception unit 11 has a reception function for receiving base station reception information from a satellite SAT. The first storage unit 12 has a storage function for storing a program or the like for deriving RTK correction information on the basis of coordinates (hereinafter, it may be simply referred to as "base station coordinates") at which the base station 10 is fixed, base station reception information, and base station coordinates. The fourth calculation unit 13 has a calculation function for deriving the RTK correction information on the basis of the program for deriving the RTK correction information. The transmission unit 14 has a transmitting function for transmitting the RTK correction information derived by the fourth calculation unit 13 to the mobile station 20. The first communication unit 15 has a communication function for communicating with the server 30. The first communication unit 15 transmits the base station reception information received by the first reception unit 11 and the information such as the base station coordinates stored in the first storage unit 12 from the base station 10 to the server 30.

The positioning detection device 21 includes a second reception unit 211, a second storage unit 212, a third calculation unit 213, a third reception unit 214, and a second communication unit 215. The second reception unit 211 has a reception function for receiving mobile station reception information from the satellite SAT. The second storage unit 212 has a storage function for storing a program for deriving positioning information and the like of the mobile station 20, information transmitted from the server 30, and the like. The third calculation unit 213 has a calculation function for deriving fixed-time position coordinates or the like which is the positioning information of the mobile station 20 on the basis of the above program. The third reception unit 214 has a reception function for receiving the RTK correction information transmitted from the transmission unit 14. The second communication unit 215 has a communication function for communicating with the server 30. The second communication unit 215 transmits, from the mobile station 20 to the server 30, the mobile station reception information received by the second reception unit 211 and information such as the fixed-time position coordinates of the mobile station 20 derived by the third calculation unit 213. In addition, the second communication unit 215 receives information such as predicted abnormality information and predicted base station information to be described later from the server 30 to the mobile station 20. The information such as the predicted abnormality information and the predicted base station information received from the server 30 is stored in the second storage unit 212.

The tractor 22 is connected to the positioning detection device 21 in a wired or wireless manner. The tractor 22 includes a constituent device 221 for automatic traveling on the basis of the positioning information of the mobile station 20 from the positioning detection device 21. The prediction system 1 derives the positioning information of the mobile station 20 using RTK-GNSS positioning. A work vehicle including a constituent device for performing automatic traveling of a mobile station on the basis of positioning information of the mobile station derived by the RTK-GNSS positioning is known, and is disclosed in, for example, Patent Literature 1. As the constituent device 221, a constituent device similar to the known work vehicle can be applied. Here, the prediction system of the present disclosure is not limited to a prediction system that derives positioning information of the mobile station 20 using RTK-GNSS positioning. For example, the prediction system of the present disclosure can be a prediction system that derives positioning information of a mobile station using other known positioning methods such as PPP positioning and DGPS positioning. Note that, from the viewpoint of accuracy of the positioning information of the mobile station 20, the prediction system of the present disclosure is preferably a prediction system using RTK-GNSS positioning like the prediction system 1.

The server 30 includes a third storage unit 31, a third communication unit 32, a first calculation unit 33, a second calculation unit 34, and a fifth calculation unit 35. The third storage unit 31 has a storage function for storing a program for deriving base station error information, mobile station error information, predicted abnormality information, predicted base station information, and the like, variation characteristics, and the like. The first calculation unit 33 has a calculation function for deriving base station error information of the base station 10 and mobile station error information of the mobile station 20 on the basis of the above program. The second calculation unit 34 has a calculation function for deriving predicted abnormality information in the mobile station 20 on the basis of the program described above. The fifth calculation unit 35 has a calculation function for deriving predicted base station information related to a base station to be switched when a positioning abnormality occurs on the basis of the above program. The third communication unit 32 has a communication function for communicating with the base station 10 and the mobile station 20. In the prediction system 1, the third communication unit 32 of the server 30 and the first communication unit 15 of the base station 10 are configured to be able to transmit and receive information to and from each other. Further, the third communication unit 32 of the server 30 and the second communication unit 215 of the positioning detection device 21 in the mobile station 20 are configured to be able to transmit and receive information to and from each other. The third communication unit 32 receives the base station reception information and the information such as the base station coordinates from the base station 10 to the server 30. The third communication unit 32 receives the mobile station reception information and the information such as the fixed-time position coordinates of the mobile station 20 from the mobile station 20 to the server 30. The third communication unit 32 transmits information such as the predicted abnormality information derived by the third calculation unit 213 and the predicted base station information derived by the fifth calculation unit 35 from the server 30 to the mobile station 20.

Derivation of various types of information by the first calculation unit 33, the second calculation unit 34, the third calculation unit 213, the fourth calculation unit 13, and the fifth calculation unit is executed by a calculation device of a computer. In FIG. 1, a calculation unit corresponding to each piece of information to be derived is illustrated. However, this does not mean that a corresponding calculation device exists for each piece of information to be derived. For example, in the prediction system 1, in the server 30, derivation of the base station error information, the predicted abnormality information, and the predicted base station information by the first calculation unit 33, the second calculation unit 34, and the fifth calculation unit 35 is executed by one calculation device.

### [Derivation of Positioning Information]

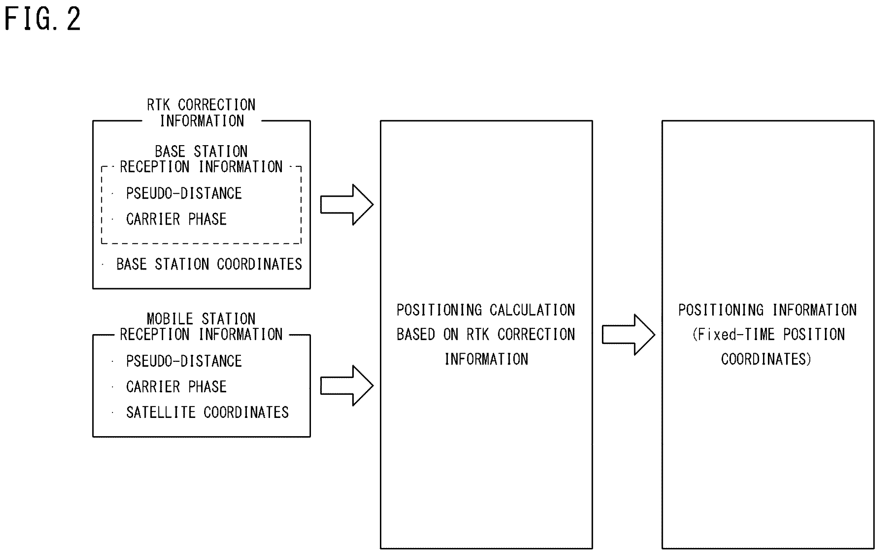

FIG. 2 is a conceptual diagram of derivation of positioning information. The positioning information is derived by the positioning calculation based on the RTK correction information by the third calculation unit 213 in the positioning detection device 21 of the mobile station 20. The third calculation unit 213 of the present disclosure derives fixed-time position coordinates of the mobile station 20 as the positioning information. In the positioning calculation based on the RTK correction information, the RTK correction information received by the third reception unit 214 and the mobile station reception information received by the second reception unit 211 are used as input information. The RTK correction information used to derive the positioning information includes at least a pseudo-distance and a carrier phase of the base station reception information and base station coordinates. The mobile station reception information used for deriving the positioning information includes at least a pseudo-distance and a carrier phase. Note that, in the present disclosure, the positioning information of the mobile station can be derived by positioning calculation similar to positioning calculation used in known RTK-GNSS positioning.

FIG. 2 illustrates a conceptual diagram in which the mobile station reception information includes satellite coordinates. Here, the satellite coordinates used for deriving the positioning information can be acquired from other than the mobile station reception information. For example, satellite coordinates included in the base station reception information received by the first reception unit 11 can also be used. Further, the server 30 can use satellite coordinates obtained from a service provider of a virtual reference station (VRS) via the Internet by using the network RTK service (not illustrated). Hereinafter, as the satellite coordinates in the present disclosure, the satellite coordinates included in the mobile station reception information are illustrated as an example.

### [Derivation of Error Information]

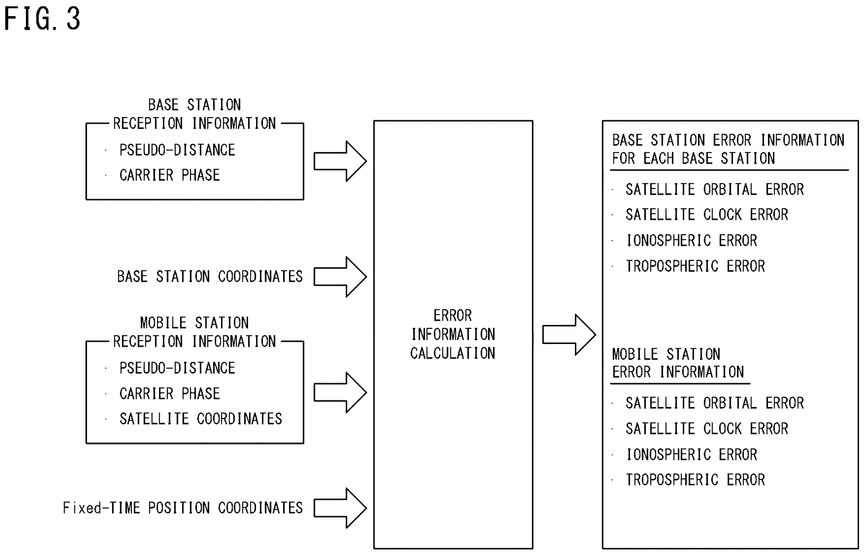

FIG. 3 is a conceptual diagram of derivation of error information. The first calculation unit 33 of the server 30 derives the base station error information and the mobile station error information as the error information. The base station error information and the mobile station error information are derived by the first calculation unit 33 by error information calculation based on the base station reception information, the base station coordinates, the mobile station reception information, and the fixed-time position coordinates. As described above, the prediction system 1 includes the plurality of base stations 10. Thus, the first calculation unit 33 derives the base station error information for each of the plurality of base stations 10. The base station reception information used for deriving the error information includes at least a pseudo-distance and a carrier phase. The mobile station reception information used for deriving the error information includes at least a pseudo-distance and a carrier phase. Similarly to FIG. 2, FIG. 3 illustrates a conceptual diagram in which the mobile station reception information includes satellite coordinates.

Examples of the error information include a satellite orbital error, a satellite clock error, a reception unit clock error, an ionospheric delay error, a tropospheric delay error, an integer bias, a position offset, and the like. The base station error information and the mobile station error information of the present disclosure each include at least one selected from a satellite orbital error, a satellite clock error, a reception unit clock error, an ionospheric delay error, a tropospheric delay error, an integer bias, and a position offset. FIG. 3 illustrates an example in which the first calculation unit 33 derives a satellite orbital error, a satellite clock error, an ionospheric delay error, and a tropospheric delay error for each of the base station error information and the mobile station error information. Note that, in the present disclosure, the satellite orbital error and the satellite clock error included in the base station error information are common to the satellite orbital error and the satellite clock error included in the mobile station error information. Therefore, it is only necessary that the satellite orbital error and the satellite clock error is included in at least one of the base station error information or the mobile station error information. Hereinafter, as the satellite orbital error and the satellite clock error in the present disclosure, the satellite orbital error and the satellite clock error included in both the base station error information and the mobile station error information are illustrated as an example.

Among the error information, error information accompanied by a temporal change is information that easily affects the occurrence of positioning abnormality. Examples of the error information accompanied by a temporal change include a satellite orbital error, a satellite clock error, a reception unit clock error, an ionospheric delay error, and a tropospheric delay error. In particular, the ionospheric delay error and the tropospheric delay error greatly affect the occurrence of positioning abnormality. Therefore, it is preferable that the error information includes at least the ionospheric delay error and the tropospheric delay error.

### [Derivation of Predicted Abnormality Information and Predicted Base Station Information]

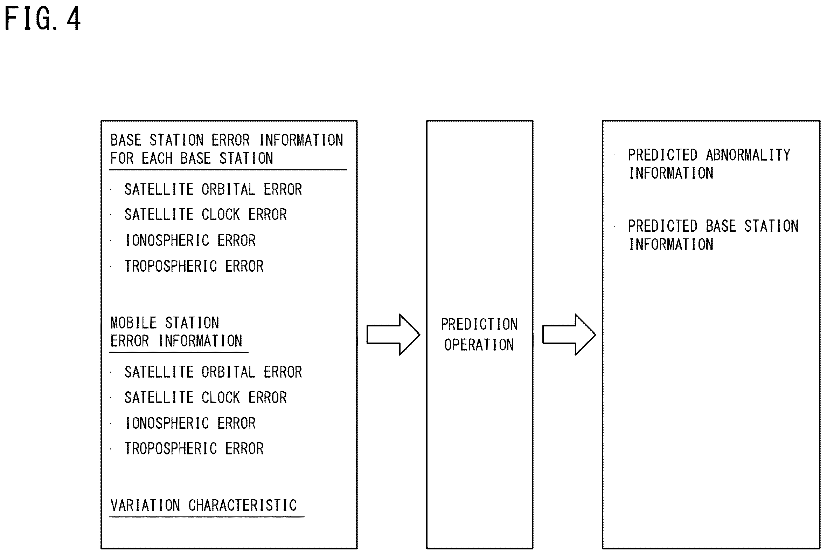

FIG. 4 is a conceptual diagram of derivation of predicted abnormality information and predicted base station information. The predicted abnormality information is information for predicting the occurrence of positioning abnormality in the mobile station 20. The predicted base station information is information for setting a base station to be switched, which is a transmission source of the RTK correction information, when a positioning abnormality occurs in the mobile station 20. Both the predicted abnormality information and the predicted base station information are derived by the prediction calculation by the calculation device of the server 30 corresponding to the second calculation unit 34 and the fifth calculation unit 35. In the prediction calculation, as the input information, the base station error information and the mobile station error information for each of the plurality of base stations 10, which are derived by the error information calculation by the first calculation unit 33 illustrated in FIG. 3, and a variation characteristic stored in the third storage unit 31 are used. The error information used for deriving the predicted abnormality information and the predicted base station information preferably includes the above-described error information accompanied by a temporal change, and particularly preferably includes at least the ionospheric delay error and the tropospheric delay error.

FIG. 4 illustrates an example in which a satellite orbital error, a satellite clock error, an ionospheric delay error, and a tropospheric delay error are respectively used as the base station error information and the mobile station error information for each base station as the input information of the prediction calculation. Similarly to FIG. 3, FIG. 4 illustrates a case where the satellite orbital error and the satellite clock error are included in both the base station error information and the mobile station error information. The variation characteristic used for deriving the predicted abnormality information and the predicted base station information is information indicating a relationship among a first change amount that is a change amount of the base station error information accompanied by a lapse of time, a second change amount that is a change amount of the mobile station error information accompanied by a lapse of time, and occurrence of a positioning abnormality in the positioning information of the mobile station 20. Note that machine learning can also be applied to derive the variation characteristic. More specifically, by applying machine learning to a pseudo distance and a carrier phase in the base station error information and the mobile station error information for one or more years in the past, it is possible to derive a variation characteristic from a result of estimating each component included in the error information for each region, time, and season, for example.

### (First Case of Deriving Predicted Abnormality Information)

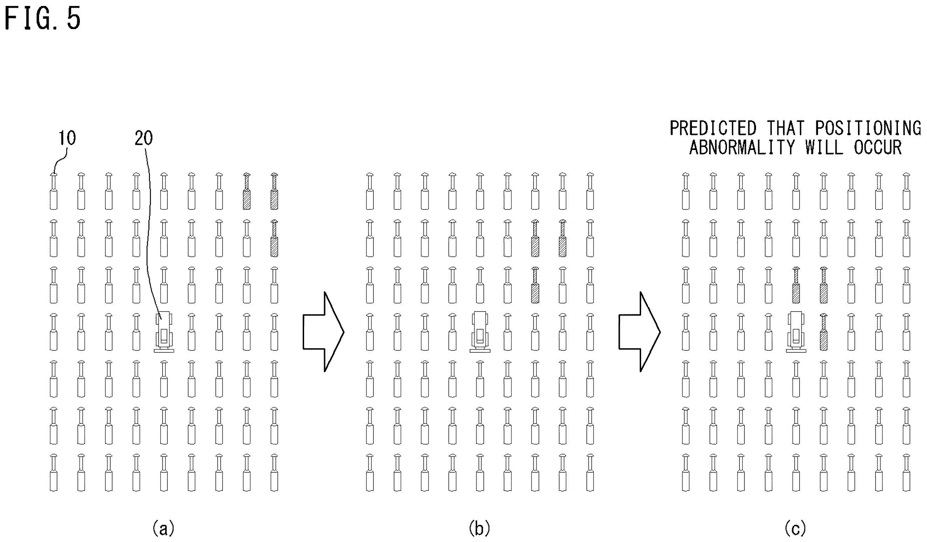

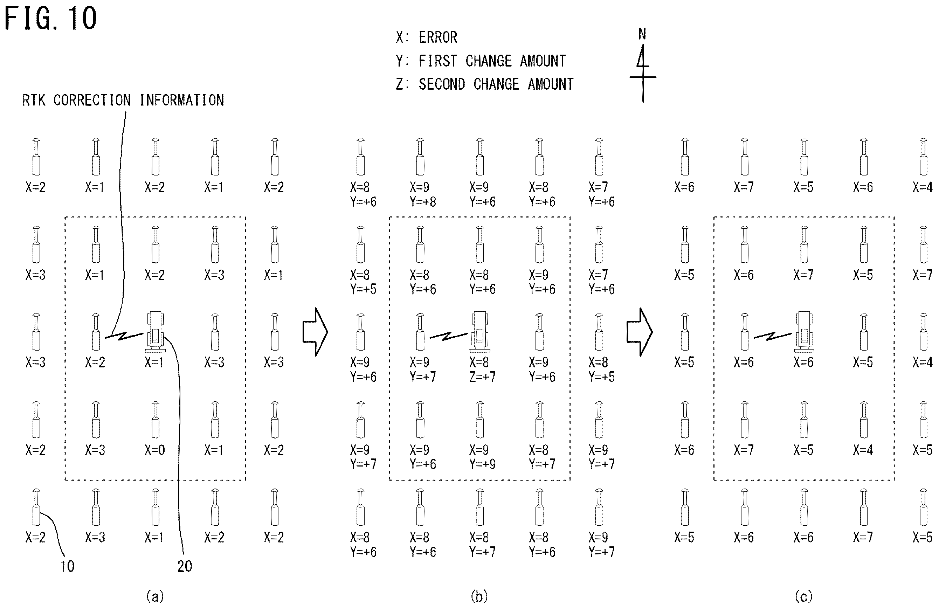

FIG. 5 is an explanatory diagram for describing a first case of deriving predicted abnormality information. FIG. 5 conceptually illustrates the mobile station 20 located at the center and a plurality of base stations 10 located around the mobile station 20. In FIG. 5, the base station 10 in which the first change amount, which is the change amount of the base station error information accompanied by a lapse of time, exceeds a reference is indicated by hatching. In the case of deriving the predicted abnormality information illustrated in FIG. 5, 10 minutes is set as the lapse of time. The first change amount includes a change amount in 10 minutes of each of the satellite orbital error, the satellite clock error, the ionospheric delay error, and the tropospheric delay error included in the base station error information for each base station derived by the first calculation unit 33. The above reference can be arbitrarily changed as setting items of the server 30. For example, in the present embodiment, among the plurality of base stations 10, a base station 10 in which the difference in the first change amount from another base station located nearest to the base station 10 is equal to or more than 10 cm can be set as the base station 10 exceeding the reference. Here, the difference in the first change amount is a difference in inter-satellite receiver distances including a satellite orbital error, a satellite clock error, an ionospheric delay error, and a tropospheric delay error between the target base station 10 and another base station 10 located nearest to the target base station 10. Note that, as the satellite clock error, a value obtained by multiplying the satellite clock error by the light speed (299792458 m/s) and converting the multiplied value as the distance can be used.

In FIG. 5, an arrow indicates a lapse of time of 10 minutes. That is, in FIG. 5, FIG. 5(c) illustrates a current state of the positional relationship between the mobile station 20 and the base station 10 in which the first change amount exceeds the reference. FIG. 5(b) illustrates a state of the positional relationship between the mobile station 20 and the base station 10, in which the first change amount exceeds the reference, 10 minutes prior to FIG. 5(c). FIG. 5(a) illustrates a state of the positional relationship between the mobile station 20 and the base station 10, in which the first change amount exceeds the reference, 10 minutes prior to FIG. 5(c). It can be seen from FIG. 5(a), FIG. 5(b), and FIG. 5(c) that the base station position of the base station 10, in which the first change amount exceeds the reference, approaches the mobile station 20 accompanied by a lapse of time. FIG. 5 illustrates that predicted abnormality information indicating that a positioning abnormality will occur is derived in the mobile station 20 in the state illustrated in FIG. 5(c).

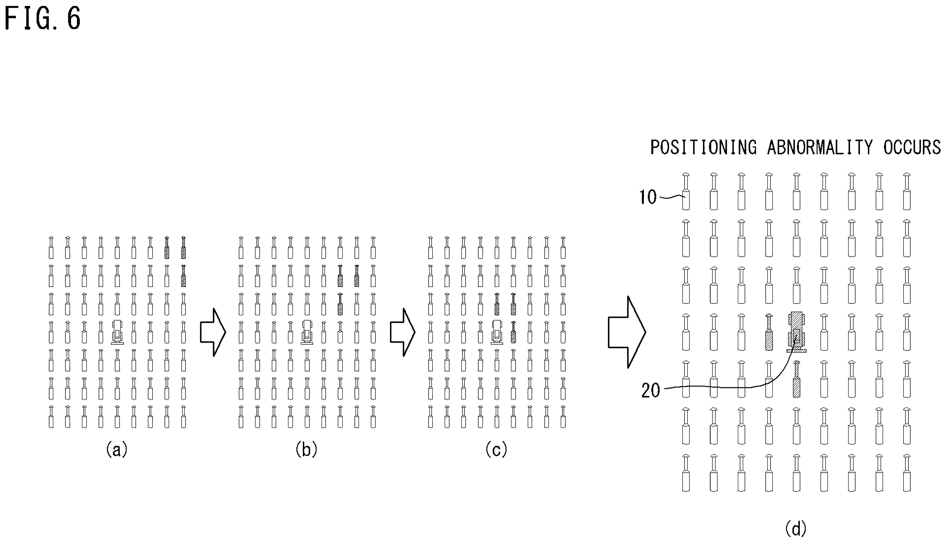

FIG. 6 is an explanatory diagram for describing a variation characteristic used for deriving predicted abnormality information that a positioning abnormality will occur in FIG. 5(c). In FIG. 6, the base station 10 in which the first change amount, which is the change amount of the base station error information accompanied by a lapse of time, exceeds the reference is indicated by hatching as in FIG. 5. Further, in FIG. 6, the mobile station 20 in which the second change amount, which is the change amount of the mobile station error information accompanied by a lapse of time, exceeds the reference is indicated by hatching. Aspects of the lapse of time, the second change amount, and the reference in the variation characteristic illustrated in FIG. 6 are similar to the aspects of the lapse of time, the first change amount, and the reference in the case of deriving the predicted abnormality information illustrated in FIG. 5. That is, the lapse of time is set to 10 minutes. The second change amount includes a change amount in 10 minutes of each of the satellite orbital error, the satellite clock error, the ionospheric delay error, and the tropospheric delay error included in the mobile station error information of the mobile station 20 derived by the first calculation unit 33. The reference can be arbitrarily changed as a setting item of the server 30. For example, in a case where the difference between the second change amount of the mobile station 20 and the first change amount of the nearest base station is equal to or more than 10 cm, the mobile station 20 exceeds the reference. More specifically, in a case where a difference between inter-satellite receiver distances in 10 minutes of the mobile station 20 and a difference between inter-satellite receiver distances in 10 minutes of the nearest base station is equal to or more than 10 cm, the mobile station 20 exceeds the reference. FIG. 6(d) illustrates a state in which the second change amount of the mobile station 20 exceeds the reference and a positioning abnormality occurs in the mobile station 20.

In FIG. 6, an arrow indicates a lapse of time of 10 minutes as in FIG. 5. FIG. 6(a), FIG. 6(b), and FIG. 6(c) illustrate the positional relationship between the mobile station 20 and the base station 10 in which the first change amount exceeds the reference similarly to FIG. 5(a), FIG. 5(b), and FIG. 5(c), respectively. Here, the variation characteristic illustrated in FIG. 6 includes information indicating that a positioning abnormality has occurred in the mobile station 20 in the state of FIG. 6(d) after a further lapse of time from FIG. 6(c).

FIG. 5(a), FIG. 5(b), and FIG. 5(c) illustrate a state of the positional relationship between the mobile station 20 and the base station 10 in which the first change amount exceeds the reference, which is similar to FIG. 6(a), FIG. 6(b), and FIG. 6(c). More specifically, both a state change accompanied by a lapse of time illustrated in FIG. 5(a) to FIG. 5(c) and a state change accompanied by a lapse of time illustrated in FIG. 6(a) to FIG. 6(c) have similarity that the base station position of the base station 10 in which the first change amount exceeds the reference approaches the mobile station 20 accompanied by a lapse of time. Thus, the second calculation unit 34 refers to the variation characteristic illustrated in FIG. 6 in deriving the predicted abnormality information of the mobile station 20 in the state illustrated in FIG. 5. Then, the second calculation unit 34 derives the predicted abnormality information that the positioning abnormality will occur in the mobile station 20 at the stage of the state illustrated in FIG. 5(c) on the basis of the variation characteristic that the positioning abnormality occurs in the mobile station 20 in the state of FIG. 6(d) in which the time has further elapsed from FIG. 6(c) corresponding to FIG. 5(c). Thus, the prediction system 1 can predict the occurrence of the positioning abnormality in the mobile station 20 with excellent accuracy before the positioning abnormality occurs in the mobile station 20.

### (Second Case of Deriving Predicted Abnormality Information)

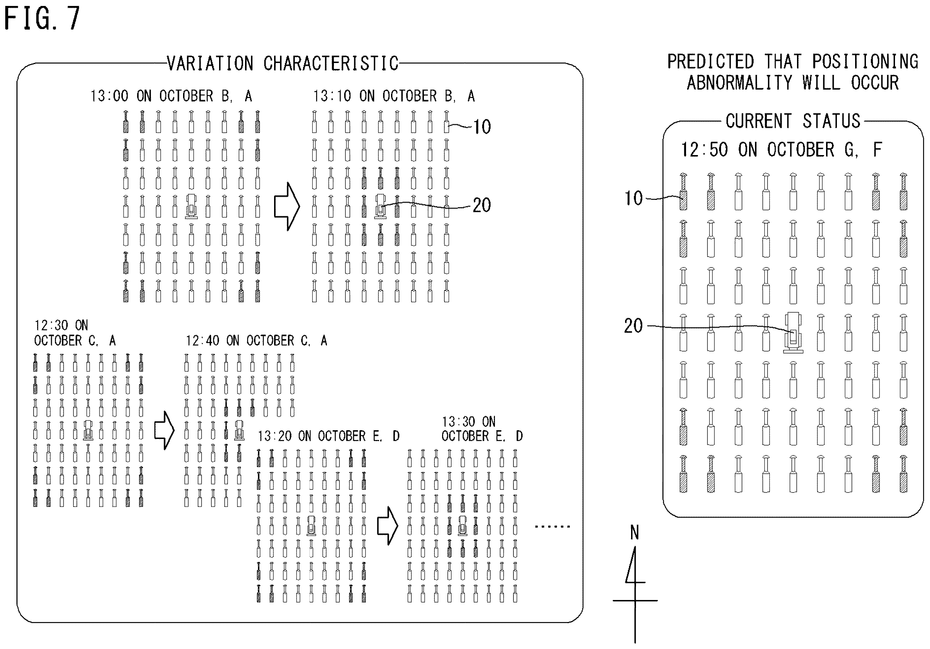

FIG. 7 is an explanatory diagram for describing a second case of deriving the predicted abnormality information. The compass rose in FIG. 7 indicates directions in a conceptual diagram of the positions of the mobile station 20 and the plurality of base stations 10 indicated in the variation characteristic and the current situation. In the second case of deriving the predicted abnormality information illustrated in FIG. 7, the variation characteristic including past records indicating the relationship between information of the first change amount at the base station position of each of the plurality of base stations 10 and occurrence of the positioning abnormality in the mobile station 20 in a predetermined period and a predetermined time zone is used.

FIG. 7 illustrates the situation of the positional relationship between the mobile station 20 and the base station 10 in which the first change amount exceeds the reference as of 12:50 on October G, F. FIG. 7 illustrates, as variation characteristics, past records before October G, F indicating a change in the positional relationship between the mobile station 20 and the base station 10 in which the first change amount exceeds the reference accompanied by a lapse of time from 10 minutes prior to the occurrence of the positioning abnormality to the occurrence of the positioning abnormality in the positioning abnormality of the mobile station 20, which has occurred around 13:00 in October. For example, FIG. 7 illustrates, as one of the variation characteristics, a state of a positional relationship between the mobile station 20 at 13:00 on October B, A and the base station 10 in which the first change amount exceeds the reference, and a state of a positional relationship between the mobile station 20 at 13:10 on October B, A in which a positioning abnormality has occurred and the base station 10 in which the first change amount exceeds the reference in the mobile station 20.

As illustrated in FIG. 7, in the occurrence of the positioning abnormality of the mobile station 20 that has occurred around 13:00 in October, there is a plurality of displacement characteristics indicating that the first change amount exceeds the reference in the base stations 10 located in the northwest, the northeast, the southeast, and the southwest with respect to the mobile station 20 10 minutes before the occurrence of the positioning abnormality. The current situation is 12:50 in October, and has similarity with the state 10 minutes before the occurrence of the positioning abnormality in the displacement characteristic. Thus, the second calculation unit 34 refers to the variation characteristic illustrated in FIG. 7 in deriving the predicted abnormality information of the mobile station 20. Then, the second calculation unit 34 derives the predicted abnormality information that a positioning abnormality occurs in the mobile station 20 at the stage of the current situation on the basis of the variation characteristic that the positioning abnormality will occur in the mobile station 20 after 10 minutes illustrated in FIG. 7. Thus, the prediction system 1 can predict the occurrence of the positioning abnormality in the mobile station 20 with excellent accuracy before the positioning abnormality occurs in the mobile station 20.

### (Third Case of Deriving Predicted Abnormality Information)

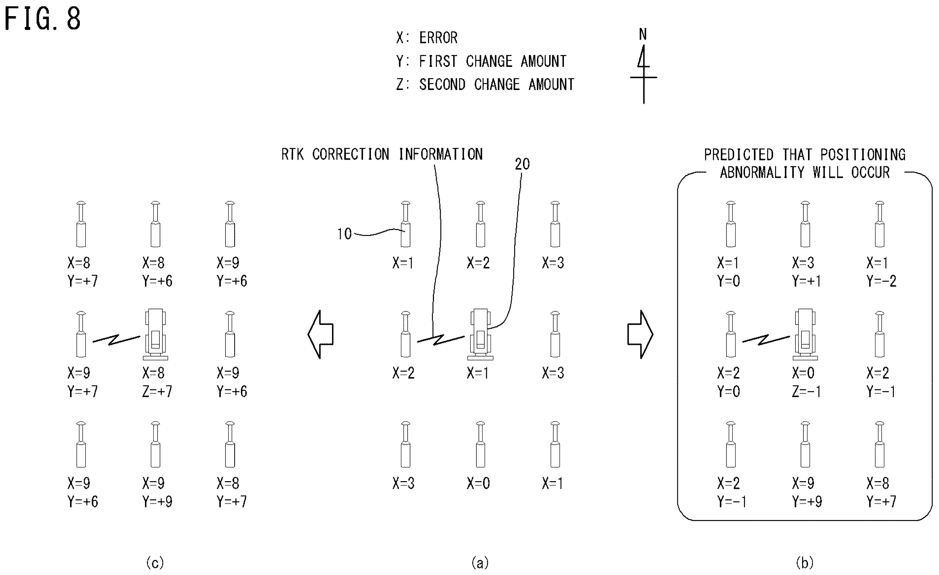

FIG. 8 is an explanatory diagram for describing a third case of deriving the predicted abnormality information. FIG. 8(a) to FIG. 8(c) illustrate conceptual diagrams of positions of the mobile station 20 and a plurality of base stations 10 located nearest to the mobile station 20. The compass rose in FIG. 8 indicates directions in the conceptual diagrams illustrated in FIG. 8(a) to FIG. 8(c). A zigzag line illustrated in FIG. 8 indicates the relationship between the base station 10 that is the transmission source of the RTK correction information and the mobile station 20.

The error illustrated in FIG. 8 indicates the magnitude of each of the mobile station error information and the base station error information in 10 steps of 0 to 9. The magnitudes of the mobile station error information and the base station error information can be classified into 10 stages, for example, by measuring values of respective components included in the mobile station error information and the base station error information estimated by the extended Kalman filter in a normal state and an abnormal state in advance, classifying error amounts into 10 stages with a probability that the positioning accuracy is affected, and then confirming which classification of 10 stages the actually estimated error is in. In FIG. 8, the error is indicated by X below each of the base station 10 and the mobile station 20. The error described below the mobile station 20 indicates the magnitude of the mobile station error information. The error described under each of the plurality of base stations 10 indicates the magnitude of each piece of base station error information.

In FIG. 8, an arrow indicates a lapse of time of 10 minutes as in FIG. 5. For example, from FIG. 8(a) which is a conceptual diagram of the mobile station 20 and the plurality of base stations 10 located nearest to the mobile station 20 illustrated in the center of FIG. 8, it can be seen that, in FIG. 8(b) which is a conceptual diagram indicated by an arrow in the right direction, the error of the mobile station 20 changes from 1 to 0 with the lapse of time of 10 minutes. On the other hand, in FIG. 8(c) which is a conceptual diagram indicated by an arrow in the left direction, it can be seen that the error of the mobile station 20 changes from 1 to 8 with the lapse of time.

In FIG. 8, the first change amount is described below each of the plurality of base stations 10 located nearest to the mobile station 20. Further, the second change amount is described below the mobile station 20. In FIG. 8, the first change amount is indicated by Y below the base station 10. Further, the second change amount is indicated by Y below the mobile station 20. For example, in FIG. 8(b), as described above, since the error of the mobile station 20 changes from 1 to 0 with the lapse of time from FIG. 8(a), the second change amount is -1. In FIG. 8(b), since the error of the base station 10 located in the east of the mobile station 20 has changed from 3 to 2 with the lapse of time from FIG. 8(a), the first change amount is -1. In FIG. 8(c), as described above, since the error of the mobile station 20 has changed from 1 to 8 with the lapse of time from FIG. 8(a), the second change amount is +7. In FIG. 8(c), since the error of the base station 10 located in the east of the mobile station 20 has changed from 3 to 9 with the lapse of time from FIG. 8(a), the first change amount is +6.

As described above, in the prediction system 1 of the present disclosure, the fixed-time position coordinates that are the positioning information of the mobile station 20 are derived by RTK-GNSS positioning measurement. Here, in the RTK-GNSS positioning, when the magnitude of the base station error information of the base station 10 that is the transmission source of the RTK correction information and the magnitude of the mobile station error information of the mobile station 20 are substantially the same, accuracy of the fixed-time position coordinates derived by positioning calculation based on the RTK correction information is ensured. This is because the base station error information and the mobile station error information are offset by the positioning calculation based on the RTK correction information. Conversely, as the magnitude of the base station error information of the base station 10 that is the transmission source of the RTK correction information and the magnitude of the mobile station error information of the mobile station 20 deviate from each other, the accuracy of the fixed-time position coordinates decreases. Note that, in the present disclosure, in a case where the difference between the error of the base station 10 that is the transmission source of the RTK correction information and the error of the mobile station 20, which is indicated by 10 stages, is equal to or less than -6 or equal to or more than +6, a positioning abnormality occurs in the mobile station 20. Conversely, in a case where the difference between the errors is equal to or more than -6 and equal to or less than +6, no positioning abnormality occurs in the mobile station 20.

In FIG. 8(a) to FIG. 8(c), the mobile station 20 receives the RTK correction information from the nearest base station 10 located to the west of the mobile station 20. An error of the base station 10 that is a transmission source of the RTK correction information illustrated in FIG. 8(a) is 2. The error of the mobile station 20 illustrated in FIG. 8(a) is 1. That is, in FIG. 8(a), the difference between the error of the base station 10 that is the transmission source of the RTK correction information and the error of the mobile station 20 is +1 (= 2 - 1). That is, in FIG. 8(a), the error difference is equal to or more than -6 and equal to or less than +6. Therefore, no positioning abnormality occurs in the mobile station 20.

An error of the base station 10 that is a transmission source of the RTK correction information illustrated in FIG. 8(b) is 2. The error of the mobile station 20 illustrated in FIG. 8(b) is 0. That is, in FIG. 8(b), the difference between the error of the base station 10 that is the transmission source of the RTK correction information and the error of the mobile station 20 is +2 (= 2 - 0). That is, in FIG. 8(b), the error difference is equal to or more than -6 and equal to or less than +6. Therefore, no positioning abnormality occurs in the mobile station 20. Here, the difference between the first change amount of the base station 10 that is the transmission source of the RTK correction information and the second change amount of the mobile station 20 is 1 (= 0 - (- 1)). From this, it can be seen that, in the lapse of time from FIG. 8(a) to FIG. 8(b), no large variation occurs in the difference between the errors between the base station 10 that is the transmission source of the RTK correction information and the mobile station 20. On the other hand, the difference between the first change amount of the nearest base station 10 located to the south of the mobile station 20 and the second change amount of the mobile station 20 is 10 (= (+9) - (-1)). In addition, the difference between the first change amount of the nearest base station 10 located in the southeast of the mobile station 20 and the second change amount of the mobile station 20 is 9 (= (+8) - (-1)). From this, it can be seen that in the lapse of time from FIG. 8(a) to FIG. 8(b), a large variation occurs in the difference between the above errors between the nearest base station 10 located in the south and the southeast of the mobile station 20 and the mobile station 20. Note that, in the present disclosure, in a case where the difference between the first change amount of the base station 10 and the second change amount of the mobile station 20 is equal to or less than -6 or equal to or more than +6, it is determined that a large variation has occurred in the difference between the errors. Conversely, in a case where the difference between the first change amount of the base station 10 and the second change amount of the mobile station 20 is equal to or more than -6 and equal to or less than +6, it is determined that no large variation has occurred in the difference between the errors.

An error of the base station 10 that is a transmission source of the RTK correction information illustrated in FIG. 8(c) is 9. An error of the mobile station 20 illustrated in FIG. 8(c) is 8. That is, in FIG. 8(c), the difference between the error of the base station 10 that is the transmission source of the RTK correction information and the error of the mobile station 20 is +1 (= 9 - 8). That is, in FIG. 8(c), the error difference is equal to or more than -6 and equal to or less than +6. Therefore, no positioning abnormality occurs in the mobile station 20. Here, in FIG. 8(c), the first change amount of the base station 10 that is the transmission source of the RTK correction information is +7. On the other hand, in FIG. 8(b), the first change amount of base station 10 that is the transmission source of the RTK correction information is 0. That is, the first change amount of the base station 10 that is the transmission source of the RTK correction information changes more greatly in FIG. 8(c) than in FIG. 8(b) with the lapse of time. However, in FIG. 8(c), the first change amount of the mobile station 20 also greatly changes to +7. Therefore, in FIG. 8(c), the difference between the first change amount of the base station 10 that is the transmission source of the RTK correction information and the second change amount of the mobile station 20 is 0 (= (+7) - (+7)), and it can be seen that no large fluctuation occurs in the difference between the errors. Here, in FIG. 8(c), +2 (= (+9) - (+7)) of the difference between the first change amount of the nearest base station 10 located on the south side of the mobile station 20 and the second change amount of the mobile station 20 is the maximum difference between the first change amount of the nearest base station 10 of the mobile station 20 and the second change amount of the mobile station 20. That is, in FIG. 8(c), it can be seen that the errors of the base station 10 nearest to the mobile station 20 and the mobile station 20 have become larger as a whole with the lapse of time from FIG. 8(a). In this case, as described above, in the RTK-GNSS positioning, the base station error information and the mobile station error information are offset, so that the accuracy of the fixed-time position coordinates is secured.

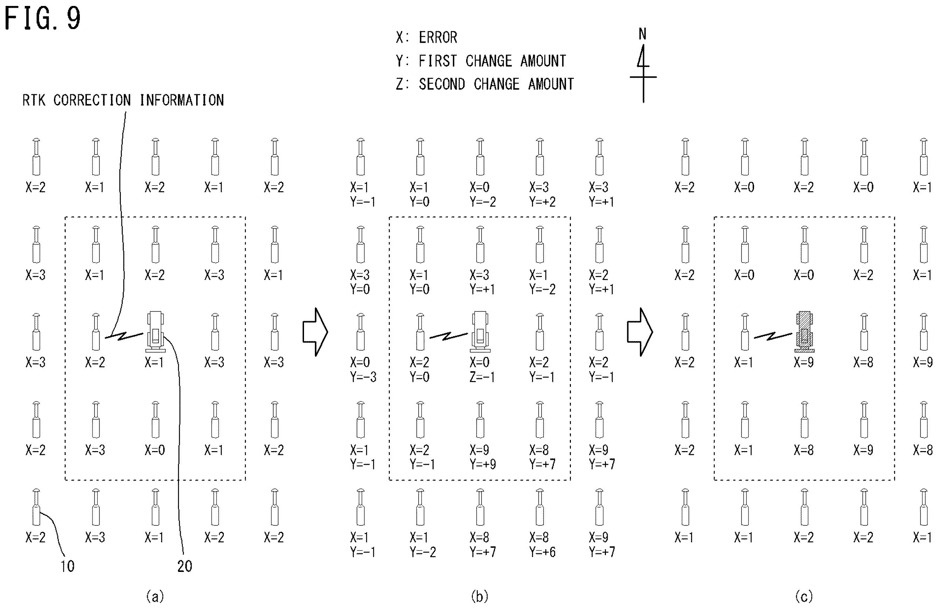

In the third case of the present disclosure, information indicating the relationship between the difference between the first change amount of each of the plurality of base stations 10 and the second change amount of the mobile station 20 and the occurrence of positioning abnormality is used as a variation characteristic. FIG. 9 is an explanatory diagram for describing a variation characteristic used when the predicted abnormality information that a positioning abnormality occurs is derived in FIG. 8(b). Dashed lines illustrated in FIG. 9 each indicate the nearest area of the mobile station 20. FIG. 9 illustrates an example of the variation characteristic in which the states of the conceptual diagrams of the mobile station 20 and the plurality of base stations 10 located nearest to the mobile station 20 illustrated in the dashed lines in FIG. 9(a) and FIG. 9(b) are the same as the states illustrated in FIG. 8(a) and FIG. 8(b), respectively, in order to facilitate understanding of derivation of the predicted abnormality information based on the variation characteristic by the second calculation unit 34 in the third case.

FIG. 9(c) illustrates a conceptual diagram of the mobile station 20 and the plurality of base stations 10 after a lapse of 10 minutes from FIG. 9(b). An error of the base station 10 that is a transmission source of the RTK correction information illustrated in FIG. 9(c) is 1. The error of the mobile station 20 illustrated in FIG. 9(c) is 9. That is, in FIG. 9(c), the difference between the error of the base station 10 that is the transmission source of the RTK correction information and the error of the mobile station 20 is -8 (= 1 - 9). That is, in FIG. 9(c), the difference between the errors is equal to or less than -6. Therefore, in the mobile station 20, a positioning abnormality occurs. Note that, in FIG. 9(c), the mobile station 20 in which the positioning abnormality has occurred is indicated by hatching.

The state of the conceptual diagram of the mobile station 20 and the plurality of base stations 10 located nearest to the mobile station 20 illustrated in the dashed line of FIG. 9(a) is similar to the state illustrated in FIG. 8(a). The state of the conceptual diagram of the mobile station 20 and the plurality of base stations 10 located nearest to the mobile station 20 illustrated in the dashed line of FIG. 9(b) is similar to the state illustrated in FIG. 8(b). Therefore, the second calculation unit 34 refers to the variation characteristic illustrated in FIG. 9 in deriving the predicted abnormality information of the mobile station 20 in a state change accompanied by a lapse of time from FIG. 8(a) to FIG. 8(b). Then, the second calculation unit 34 derives the predicted abnormality information that the positioning abnormality will occur in the mobile station 20 at the stage of the state illustrated in FIG. 8(b) on the basis of the variation characteristic that the positioning abnormality occurs in the mobile station 20 in the state of FIG. 9(c) in which the time further elapses from FIG. 9(b) corresponding to FIG. 8(b). Thus, the prediction system 1 can predict the occurrence of the positioning abnormality in the mobile station 20 with excellent accuracy before the positioning abnormality occurs in the mobile station 20.

FIG. 10 is an explanatory diagram for describing a variation characteristic used when the predicted abnormality information that a positioning abnormality will occur is not derived in FIG. 8(c). FIG. 10 is the same as FIG. 9 except for values of the error, the first change amount, and the second change amount. In the variation characteristic illustrated in FIG. 10, the error entirely fluctuates in the area including the nearest mobile station 20 with the lapse of time to FIG. 10(a) to FIG. 10(c). Therefore, in FIG. 10(a) to FIG. 10(c), the difference between the error of the base station 10 that is the transmission source of the RTK correction information and the error of the mobile station 20 is equal to or more than -6 and equal to or less than +6. Therefore, no positioning abnormality occurs in the mobile station 20.

The state of the conceptual diagram of the mobile station 20 and the plurality of base stations 10 located nearest to the mobile station 20 illustrated in the dashed line of FIG. 10(a) is similar to the state illustrated in FIG. 8(c). The state of the conceptual diagram of the mobile station 20 and the plurality of base stations 10 located nearest to the mobile station 20 illustrated in the dashed line of FIG. 10(b) is similar to the state illustrated in FIG. 8(c). Therefore, the second calculation unit 34 refers to the variation characteristic illustrated in FIG. 10. As described above, no positioning abnormality occurs in the state of FIG. 9(c) after further elapse of time from 11(b). Therefore, in the state illustrated in FIG. 8(c), the second calculation unit 34 does not derive predicted abnormality information that a positioning abnormality will occur in the mobile station 20.

As in the third case of the present disclosure, the third storage unit 31 of the server 30 may be configured to store, as the variation characteristics, a variation characteristic when the predicted abnormality information that a positioning abnormality will occur is derived as illustrated in FIG. 9, and a variation characteristic when the predicted abnormality information that a positioning abnormality occurs is not derived as illustrated in FIG. 10. Thus, the prediction system 1 can predict the occurrence of the positioning abnormality in the mobile station 20 with more excellent accuracy before the positioning abnormality occurs in the mobile station 20.

### (Derivation Example of Predicted Base Station Information)

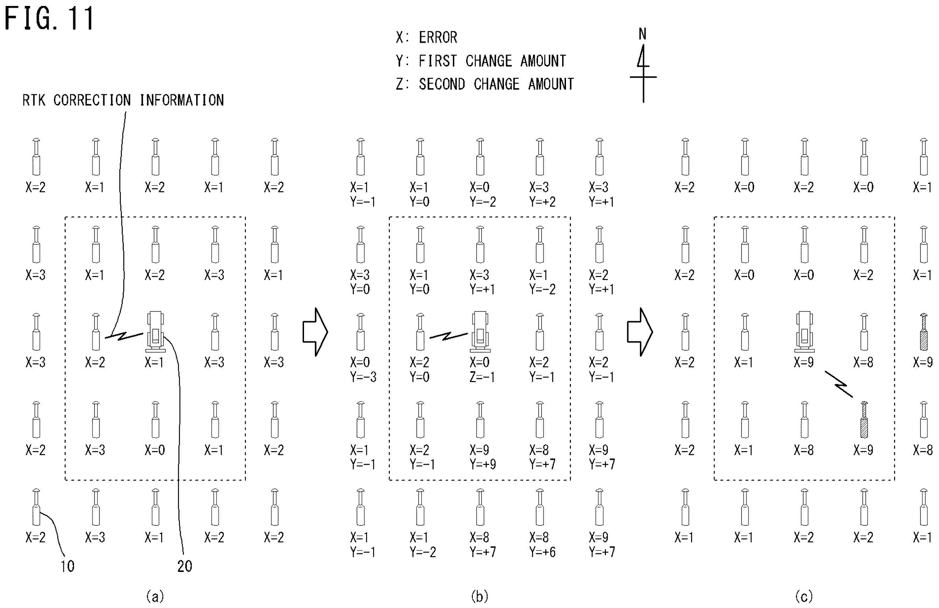

FIG. 11 is an explanatory diagram for describing a derivation case of predicted base station information. In the derived case of the predicted base station information of the present disclosure, in the above-described third case of deriving the predicted abnormality information, an example of deriving the predicted base station information from the variation characteristic illustrated in FIG. 9 in the state of FIG. 8(b) in which the predicted abnormality information that the positioning abnormality will occur is derived is illustrated. FIG. 11(a) to FIG. 11(c) correspond to FIG. 9(a) to FIG. 9(c), respectively. FIG. 11(a) and FIG. 11(b) are the same as FIG. 9(a) and FIG. 9(b), respectively. FIG. 11(c) is different from FIG. 9(c) in base station 10 that is a transmission source of the RTK correction information. More specifically, in FIG. 11(c), the base station 10 that is the transmission source of the RTK correction information is replaced with the nearest base station 10 located in the west of the mobile station 20 in FIG. 9(c), and is replaced with the nearest base station 10 located in the southeast of the mobile station 20. In addition, in FIG. 11(c), the base station 10 having the same error as the error of the mobile station 20 is indicated by hatching.

The fifth calculation unit 35 of the server 30 extracts the base station 10 having the same error as the error of the mobile station 20 from FIG. 9(c) when the second calculation unit 34 derives the predicted abnormality information that the positioning abnormality will occur in the state of FIG. 8(b) based on the variation characteristic illustrated in FIG. 9. That is, the fifth calculation unit 35 extracts the base station 10 indicated by hatching in FIG. 11(c). As described above, in the RTK-GNSS positioning, the base station error information and the mobile station error information are offset by the positioning calculation based on the RTK correction information. Therefore, in FIG. 11(c), base station 10 indicated by hatching is a candidate for the transmission source of the RTK correction information.

As the base station 10 that is the transmission source of the RTK correction information is closer to the mobile station 20, the ionospheric delay error and the tropospheric delay error tend to approach the ionospheric delay error and the tropospheric delay error in the mobile station 20, and the reliability of the RTK correction information is improved. Therefore, the fifth calculation unit 35 derives the predicted base station information in which the base station 10 nearest to the mobile station 20 among the extracted base stations 10 is set as the transmission source of the RTK correction information. That is, as illustrated in FIG. 11(c), the fifth calculation unit 35 derives the predicted base station information in which the nearest base station 10 located in the southeast of the mobile station 20 is set as the transmission source of the RTK correction information. Note that the derived predicted base station information is transmitted from the third communication unit 32 of the server 30 and received by the second communication unit 215 in the positioning detection device 21 of the mobile station 20. The predicted base station information received by the second communication unit 215 is stored in the second storage unit 212.

As described above, the derivation of the predicted base station information by the fifth calculation unit 35 is performed when the predicted abnormality information that a positioning abnormality will occur is derived in FIG. 8(b). That is, the prediction system 1 can set the base station 10 to be switched, which is the transmission source of the RTK correction information, in the mobile station 20 before the positioning abnormality will occur. This makes it possible to smoothly switch the base station 10 when the positioning abnormality occurs. Therefore, when the positioning abnormality occurs, the fixed-time position coordinates of the mobile station 20 can be quickly derived on the basis of the RTK correction information of the base station 10 to be switched set on the basis of the predicted base station information. Thus, continuous automatic traveling of the mobile station 20 becomes possible, and work efficiency in the worksite is improved.

### [Flow of Positioning by Prediction System]

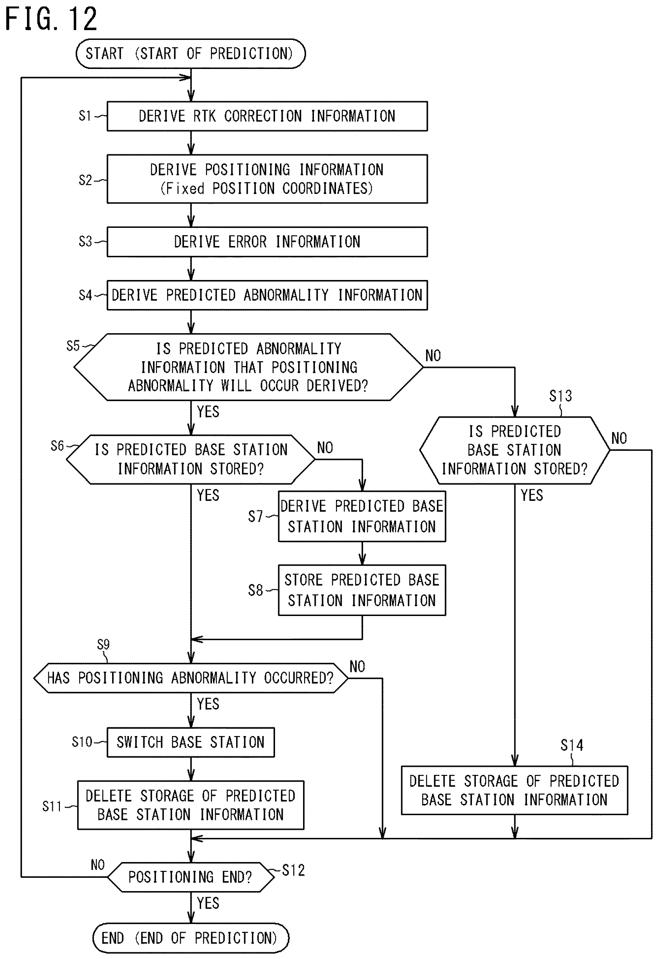

FIG. 12 is a flowchart illustrating a flow of processing by the prediction system 1 according to the first embodiment of the present disclosure. The prediction system 1 is configured to be capable of executing steps S1 to S14 illustrated in FIG. 12 from start (prediction start) to end (prediction end).

As illustrated in FIG. 12, when the prediction is started in the prediction system 1, the fourth calculation unit 13 of the base station 10 executes S1 that is a step of deriving the RTK correction information on the basis of the base station reception information from the satellite SAT received by the first reception unit 11 and the base station coordinates stored in the first storage unit 12. Note that, in the prediction system 1, the base station reception information and the base station coordinates are transmitted by the first communication unit 15 of the base station 10 and received by the third communication unit 32 of the server 30. Furthermore, in the prediction system 1, the RTK correction information is transmitted by the transmission unit 14 of the base station 10, and received by the third reception unit 214 in the positioning detection device 21 of the mobile station 20.

In the positioning detection device 21 of the mobile station 20, the third calculation unit 213 executes S2 that is a step of deriving the fixed-time position coordinates as the positioning information of the mobile station 20 on the basis of the RTK correction information derived in S1 and the mobile station reception information received by the second reception unit 211 of the positioning detection device 21. Note that, in the prediction system 1, the mobile station reception information and the fixed-time position coordinates are transmitted by the second communication unit 215 in the positioning detection device 21 of the mobile station 20 and received by the third communication unit 32 of the server 30.

The first calculation unit 33 of the server 30 executes S3 that is a step of deriving the base station error information of the base station 10 and the mobile station error information of the mobile station 20 on the basis of the base station reception information, the base station coordinates, the mobile station reception information, and the fixed-time position coordinates received by the third communication unit 32. Next, the second calculation unit 34 of the server 30 executes S4 that is a step of deriving predicted abnormality information on the basis of the base station error information and the mobile station error information derived in S3 and the variation characteristic stored in the third storage unit 31. Note that, in the prediction system 1, the predicted abnormality information is transmitted by the third communication unit 32 and received by the second communication unit 215 in the positioning detection device 21 of the mobile station 20.

The second calculation unit 34 of the server 30 executes S5 that is a step of determining whether or not the predicted abnormality information that a positioning abnormality will occur is derived in S4. When it is determined in S5 that the predicted abnormality information that the positioning abnormality will occur is derived, the second calculation unit 34 executes S6 that is a step of determining whether or not the predicted base station information is stored in the second storage unit 212 of the mobile station 20. When it is determined in S6 that the predicted base station information is stored, the process proceeds to S9.

When it is determined in S6 that the predicted base station information is not stored, the fifth calculation unit 35 of the server 30 executes S7 that is a step of deriving the predicted base station information on the basis of the base station error information, the mobile station error information, and the variation characteristic. In the prediction system 1, the predicted base station information derived in S7 is transmitted by the third communication unit 32 and received by the second communication unit 215 in the positioning detection device 21 of the mobile station 20. The predicted base station information received by the second communication unit 215 is stored in the second storage unit 212 in the positioning detection device 21 of the mobile station 20 in step S8.

The second calculation unit 34 of the server 30 executes S9 that is a step of determining whether or not a positioning abnormality occurs on the basis of the base station error information and the mobile station error information. In a case where it is determined in S9 that no positioning abnormality occurs, the process proceeds to S12 that is a step of determining whether or not there is an instruction to end prediction. When it is determined in S9 that the positioning abnormality has occurred, the third calculation unit 213 in the positioning detection device 21 of the mobile station 20 executes S10 that is a step of switching the base station 10 that is the transmission source of the RTK correction information on the basis of the predicted base station information stored in the second storage unit 212. After the base station 10 that is the transmission source of the RTK correction information is switched in step S10, the predicted base station information stored in the second storage unit 212 is deleted from the storage in the second storage unit 212 in step S11, and the process shifts to step S12. Note that, in the prediction system 1, the prediction end instruction is input from an input unit included in the constituent device 221 in the tractor 22 of the mobile station 20.

When it is determined that there is an instruction to end the prediction in S12 that is a step of determining whether or not there is an instruction to end the prediction, the positioning ends and the process ends. When it is determined in S12 that there is no prediction end instruction, the process returns to S1.

When it is determined in S5 that the predicted abnormality information that the positioning abnormality will occur is not derived, the second calculation unit 34 executes S13 that is a step of determining whether or not the predicted base station information is stored in the second storage unit 212 of the mobile station 20. In a case where it is determined in S13 that the predicted base station information is stored, the predicted base station information stored in the second storage unit 212 is deleted from the storage of the second storage unit 212 in step S14, and the process proceeds to S12. In a case where it is determined in S13 that the predicted base station information is not stored, the process proceeds to S12.

### [Other Modifications]

The embodiment disclosed herein is illustrative in all respects and is not restrictive. The scope of rights of the present invention is not limited to the above-described embodiments, and includes all modifications within the scope equivalent to the configurations described in the claims.

### (Modification of Prediction System 1)

The prediction system 1 includes the base station 10, the mobile station 20, and the server 30, but the prediction system of the present disclosure is not limited to this configuration. For example, the prediction system of the present disclosure can be configured not to include a server. In a case where the prediction system 1 does not include a server, for example, it is conceivable that the first communication unit 15 of the base station 10 and the second communication unit 215 of the mobile station 20 transmit and receive information between the base station 10 and the mobile station 20, and the positioning detection device 21 of the mobile station 20 includes the third storage unit 31, the first calculation unit 33, the second calculation unit 34, and the fifth calculation unit 35.

### (Prediction System not Including Mobile Station)

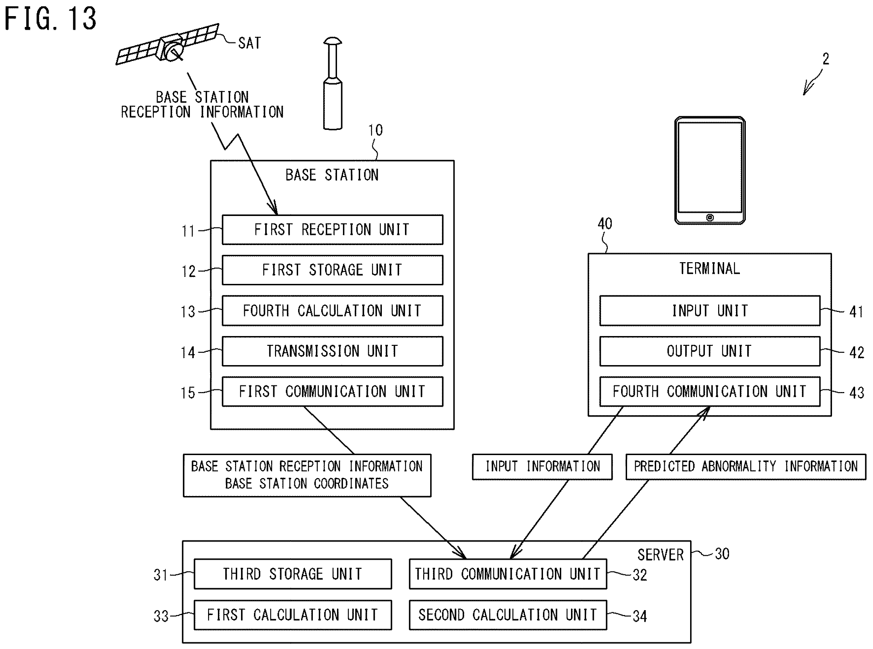

The prediction system of the present disclosure can be configured not to include a mobile station. Examples of the prediction system not including a mobile station include a prediction system that derives predicted abnormality information for predicting occurrence of a positioning abnormality at a predetermined position. FIG. 13 is a schematic diagram illustrating an overall configuration of a prediction system 2 according to a second embodiment of the present disclosure. The prediction system 2 includes a terminal 40 instead of the mobile station 20 of the prediction system 1. As the terminal 40, a known terminal such as a smartphone, a tablet, or a personal computer can be applied. In the prediction system 2 illustrated in FIG. 13, the same configurations as those of the prediction system 1 illustrated in FIG. 1 are denoted by the same reference numerals and the same names.

The terminal 40 includes an input unit 41, an output unit 42, and a fourth communication unit 43. The input unit 41 has an input function for inputting a predetermined position for predicting occurrence of a positioning abnormality. The output unit 42 has an output function for outputting predicted abnormality information for predicting occurrence of a positioning abnormality. The fourth communication unit 43 has a communication function for communicating with the server 30. The fourth communication unit 43 transmits input information and the like regarding the predetermined position input by the input unit 41 from the terminal 40 to the server 30. The fourth communication unit 43 receives information such as predicted abnormality information from the server 30 to the terminal 40.

In the prediction system 2, the first calculation unit 33 derives base station error information on the basis of base station information and base station coordinates. In addition, the second calculation unit 34 derives predicted abnormality information at the predetermined position input by the input unit 41 on the basis of the base station error information and a variation characteristic. The predicted abnormality information derived by the second calculation unit 34 is output to the output unit 42.

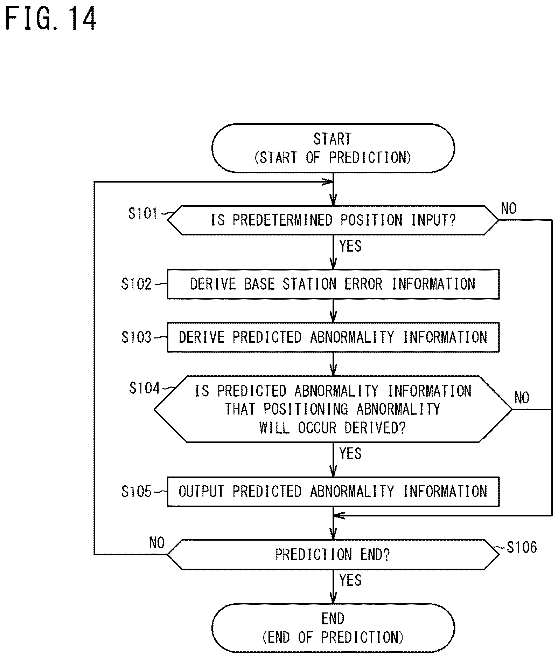

FIG. 14 is a flowchart illustrating a flow of prediction of occurrence of a positioning abnormality by the prediction system 2 according to the second embodiment of the present disclosure. The prediction system 1 is configured to be capable of executing steps of S101 to S106 illustrated in FIG. 14 from start (prediction start) to end (prediction end).

As illustrated in FIG. 14, when the prediction in the prediction system 2 is started, it is determined in step S101 whether or not there is an input of the predetermined position in the input unit 41 of the terminal 40. In a case where it is determined in S101 that there is no input of the predetermined position, the process proceeds to S106 that is a step of determining whether or not there is an instruction to end the prediction. Note that, in the prediction system 2, the instruction to end the prediction is input from the input unit 41.

In a case where it is determined in S101 that there is an input of the predetermined position, the first calculation unit 33 of the server 30 executes S102 which is a step of deriving the base station error information of the base station 10. Next, the second calculation unit 34 of the server 30 executes S103 that is a step of deriving the predicted abnormality information on the basis of the base station error information derived in S102 and the variation characteristic stored in the third storage unit 31.

The second calculation unit 34 of the server 30 executes S104 that is a step of determining whether or not the predicted abnormality information that the positioning abnormality will occur is derived in S103. In a case where it is determined in S104 that the predicted abnormality information that the positioning abnormality will occur is not derived, the process proceeds to S106. In a case where it is determined in S104 that the predicted abnormality information that the positioning abnormality will occur is derived, the predicted abnormality information that the positioning abnormality will occur is output to the output unit 42 of the terminal 40 in step S105, and the process proceeds to S106.

When it is determined that there is an instruction to end the prediction in S106 that is a step of determining whether or not there is an instruction to end the prediction, the prediction ends and the process ends. In a case where it is determined in S106 that there is no prediction end instruction, the process returns to S101.

### (Application of Position Identification of Mobile Station by Dead Reckoning)

When the predicted abnormality information that the positioning abnormality will occur is derived, the prediction system 1 specifies the base station 10 that is the transmission source of the RTK correction information on the basis of the predicted base station information, and switches the base station 10 that is the transmission source of the RTK correction information to the specified base station 10 when the positioning abnormality occurs, thereby continuing the derivation of the fixed-time position coordinates of the mobile station 20 by the RTK-GNSS positioning. However, the prediction system of the present disclosure is not limited to the continuation of the position identification of the mobile station by RTK-GNSS positioning. It is also possible to switch to position identification of the mobile station by dead reckoning when the positioning abnormality occurs. For example, by providing the mobile station with a sixth calculation unit that derives the position of the mobile station by dead reckoning on the basis of various sensors such as a gyro sensor and an acceleration sensor and information from the various sensors, it is possible to switch to position identification of the mobile station by dead reckoning when a positioning abnormality occurs.

### (Derivation of Base Station Error Information)

In FIG. 3 described in the above-described derivation of the error information, a conceptual diagram in which both the base station error information and the mobile station error information are derived is illustrated. Here, the first calculation unit 33 of the server 30 may continuously derive the base station error information on the basis of the base station reception information and the base station coordinates in a state where the predicted abnormality information is not derived by the prediction system 1. Further, similarly in the prediction system 2, the first calculation unit 33 of the server 30 may continuously derive the base station error information in a state where the predicted abnormality information is not derived by the prediction system 2. Thus, when the prediction system 1 or the prediction system 2 starts deriving the predicted abnormality information, the predicted abnormality information can be quickly derived.

### (Switching of Position Identification Unit of Mobile Station)

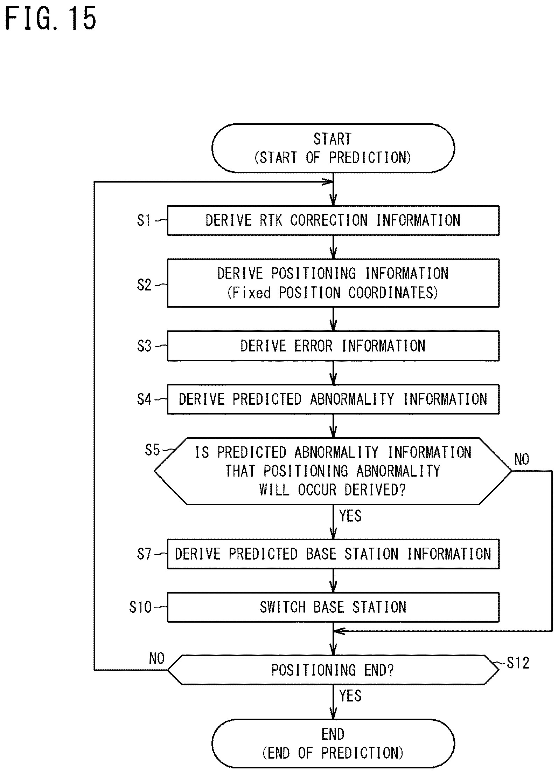

The prediction system 1 switches the base station 10 that is the transmission source of the RTK correction information when the positioning abnormality occurs, but the switching may be performed before the positioning abnormality occurs. That is, the prediction system of the present disclosure is not limited to switching when a positioning abnormality occurs. For example, as illustrated in the flowchart of FIG. 15, the prediction system 1 may switch the base station 10 that is the transmission source of the RTK correction information when the predicted abnormality information is derived.

FIG. 15 illustrates a modification of the flowchart illustrated in FIG. 12. In FIG. 15, the steps denoted by the same numbers as the numbers of the steps illustrated in FIG. 12 are processed in the same manner as in the description of the steps in FIG. 12, and thus the description thereof will be partially omitted. In the processing of the modification of the flowchart illustrated in FIG. 15, in a case where it is determined in S5 that the predicted abnormality information that the positioning abnormality will occur is derived, S7 that is a step of deriving the predicted base station information is executed. The predicted base station information derived in S7 is transmitted to the positioning detection device 21 of the mobile station 20 by the third communication unit 32. The third calculation unit 213 in the positioning detection device 21 of the mobile station 20 executes S10 that is a step of switching the base station 10 that is the transmission source of the RTK correction information on the basis of the received predicted base station information.

Further, the switching of the base station 10 that is the transmission source of the RTK correction information may be performed at timing other than the timing at which the predicted abnormality information is derived before the occurrence of the positioning abnormality. Note that the switching of the position identification of the mobile station by the above-described dead reckoning can also be performed before the occurrence of the positioning abnormality.

### REFERENCE SIGNS LIST

- 1, 2: prediction system
- 10: base station
- 11: first reception unit
- 12: first storage unit
- 13: fourth calculation unit
- 14: transmission unit
- 15: first communication unit
- 20: mobile station
- 21: positioning detection device
- 211: second reception unit
- 212: second storage unit
- 213: third calculation unit
- 214: third reception unit
- 215: second communication unit
- 22: tractor
- 221: constituent device
- 30: server
- 31: third storage unit
- 32: third communication unit
- 33: first calculation unit
- 34: second calculation unit
- 35: fifth calculation unit
- 40: terminal
- 41: input unit
- 42: output unit
- 43: fourth communication unit

## Claims

1. A prediction system (1, 2) for predicting occurrence of a positioning abnormality, the prediction system comprising:
a plurality of base stations (10) configured to receive base station reception information from a satellite;
a first calculation unit (33) configured to derive base station error information for each of the base stations (10) on a basis of the base station reception information for each of the base stations (10) and base station coordinates for each of the base stations (10);
a storage unit configured to store a variation characteristic indicating a relationship between a first change amount, which is a change amount of the base station error information accompanied by a lapse of time, and occurrence of a positioning abnormality at a predetermined position; and
a second calculation unit (34) configured to derive predicted abnormality information for predicting occurrence of the positioning abnormality on a basis of the base station error information and the variation characteristic.

2. The prediction system (1, 2) according to claim 1, wherein the base station reception information includes at least a pseudo-distance and a carrier phase.

3. The prediction system (1, 2) according to claim 1 or 2, wherein the base station error information includes at least one selected from an ionospheric delay error and a tropospheric delay error in the base stations (10).

4. The prediction system (1, 2) according to any one of claims 1 to 3, wherein the variation characteristic includes a past record indicating a relationship between information of the first change amount at a base station position of each of the base stations (10) and occurrence of the positioning abnormality in a predetermined period and a predetermined time zone.

5. The prediction system (1, 2) according to any one of claims 1 to 4, wherein the second calculation unit (34) derives predicted abnormality information that the positioning abnormality will occur when a base station position of the base station (10) in which the first change amount exceeds a predetermined reference approaches the predetermined position.

6. The prediction system (1, 2) according to any one of claims 1 to 4, further comprising:
a mobile station (20) configured to receive mobile station reception information from a satellite;
a third calculation unit (213) configured to derive positioning information of the mobile station (20) based on the base station reception information and the mobile station reception information, wherein
the predetermined position is the positioning information,
the first calculation unit (33) derives the base station error information and mobile station error information of the mobile station (20) on a basis of the base station reception information, the base station coordinates, the mobile station reception information, and the positioning information,
the variation characteristic indicates a relationship among the first change amount, a second change amount that is a change amount of the mobile station error information accompanied by a lapse of time, and occurrence of a positioning abnormality in the positioning information, and
the second calculation unit (34) derives the predicted abnormality information on a basis of the base station error information, the mobile station error information, and the variation characteristic.

7. The prediction system (1, 2) according to claim 6, wherein
the mobile station reception information includes at least a pseudo-distance and a carrier phase.

8. The prediction system (1, 2) according to claim 7, comprising:
a fourth calculation unit (13) configured to derive RTK correction information based on the base station reception information, wherein
the third calculation unit (213) derives the positioning information on a basis of the RTK correction information and the mobile station reception information.

9. The prediction system (1, 2) according to any one of claims 6 to 8, wherein
the mobile station error information includes at least one selected from an ionospheric delay error and a tropospheric delay error in the mobile station.

10. The prediction system (1, 2) according to any one of claims 6 to 9, wherein the second calculation unit (34) derives predicted abnormality information that the positioning abnormality will occur when a difference between the first change amount of any one of the base stations (10) and the second change amount exceeds a predetermined reference.

11. The prediction system (1, 2) according to any one of claims 6 to 10, comprising a fifth calculation unit (35) configured to derive predicted base station information for predicting the base station (20) having the base station error information having a small difference from the mobile station error information on a basis of the base station error information, the mobile station error information, and the variation characteristic.

12. The prediction system (1, 2) according to claim 11, wherein the third calculation unit (213) derives the positioning information on a basis of the base station reception information of the base station (10) predicted by the predicted base station information and the mobile station reception information.

13. The prediction system (1, 2) according to any one of claims 6 to 10, wherein the mobile station (20) includes a sixth calculation unit that identifies a position of the mobile station (20) by dead reckoning.

14. A method for predicting occurrence of a positioning abnormality, the method comprising:
a first reception step of receiving base station reception information from a satellite in a plurality of base stations (10);
an error information deriving step of deriving base station error information for each of the base stations (10) on a basis of the base station reception information for each of the base stations (20) and base station coordinates for each of the base stations (10); and
a prediction step of predicting occurrence of the positioning abnormality on a basis of a variation characteristic indicating a relationship between a first change amount, which is a change amount of the base station error information accompanied by a lapse of time, and occurrence of a positioning abnormality at a predetermined position.

15. The method for predicting occurrence of a positioning abnormality according to claim 14, the method comprising:
a second reception step of receiving mobile station reception information from a satellite in a mobile station (20); and
a positioning step of deriving positioning information of the mobile station (20) on a basis of the base station reception information and the mobile station reception information, wherein
the predetermined position is the positioning information,
the error information deriving step is a step of deriving the base station error information and mobile station error information of the mobile station (20) on a basis of the base station reception information, the base station coordinates, the mobile station reception information, and the positioning information,
the variation characteristic indicates a relationship among the first change amount, a second change amount that is a change amount of the mobile station error information accompanied by a lapse of time, and occurrence of a positioning abnormality in the positioning information, and
the prediction step includes predicting occurrence of the positioning abnormality on a basis of the base station error information, the mobile station reception information, and the variation characteristic.
